(19) Europäisches Patentamt
European Patent Office
Office européen des brevets

(11) EP 0 481 898 B1

# (12) FASCICULE DE BREVET EUROPEEN

(45) Date de publication et mention de la délivrance du brevet:
**18.09.1996 Bulletin 1996/38**

(51) Int Cl.[6]: **C08L 51/06**
// (C08L51/06, 77:02, 23:08)

(21) Numéro de dépôt: **91402788.3**

(22) Date de dépôt: **18.10.1991**

(54) **Compositions réticulables à base de polyéthylène et les matériaux réticulés qui en dérivent**

Vernetzbare Polyethylen-Zusammensetzungen und die daraus abgeleiteten vernetzten Materialien

Crosslinkable polyethylene-based compositions and the crosslinked materials therefrom derived

(84) Etats contractants désignés:
**BE DE ES GB IT NL**

(30) Priorité: **19.10.1990 FR 9013077**

(43) Date de publication de la demande:
**22.04.1992 Bulletin 1992/17**

(73) Titulaire: **INSTITUT FRANCAIS DU PETROLE**
**F-92506 Rueil-Malmaison Cédex (FR)**

(72) Inventeurs:
- **Jarrin, Jacques**
**F-92500 Rueil Malmaison (FR)**
- **Serpe, Gaetan**
**F-92500 Rueil Malmaison (FR)**
- **Dawans, François**
**F-78380 Bougival (FR)**

(56) Documents cités:
**EP-A- 0 334 205** **GB-A- 2 134 530**
- **PATENT ABSTRACTS OF JAPAN vol. 10, no. 390 (C-394)(2447) 26 Décembre 1986**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne le domaine des polyéthylènes réticulés utilisables pour former diverses pièces telles que des profilés, des tubes, des conteneurs (réservoirs ou flacons), des pièces injectées, des feuilles ou des films. La réticulation confère aux pièces réalisées à partir de ces matériaux des propriétés mécaniques (tenue au fluage, résistance aux chocs) et physico-chimiques (résistance aux gaz sous-pression, insolubilité dans les hydrocarbures) supérieures à celle que l'on observe pour les mêmes pièces réalisées à partir de polyéthylènes non réticulés.

Différents modes de réticulation du polyéthylène ont été décrits dans l'art antérieur.

On connait par exemple la réticulation par irradiation sous rayonnement. Ce type de traitement est réalisé à température ambiante et la dose de rayonnement est liée au taux de réticulation recherché. Toutefois, la profondeur de pénétration du rayonnement dans le matériau limite l'épaisseur des objets réticulés par ce procédé à quelques millimètres environ.

On connait également la réticulation par peroxyde, qui nécessite un mélange préalable du polyéthylène de base avec un amorceur radicalaire judicieusement choisi et éventuellement des additifs, puis la transformation du mélange en extrudeuse, par exemple à une température inférieure à la température de décomposition du peroxyde, et enfin la réticulation en continu de l'objet à la température de décomposition du peroxyde, dans un four sous azote ou sous vapeur d'eau ou encore dans un bain de sel fondu. Ce procédé s'applique bien à la réticulation du polyéthylène basse densité qui s'extrude à des températures de l'ordre de 140°C, qui permettent d'éviter la décomposition du peroxyde dans l'extrudeuse, la réticulation vers 180°C environ étant ensuite assez rapide. Par contre, la réticulation des objets en polyéthylène haute densité requiert des peroxydes stables vers 180°C (températures usuelles d'extrusion des PEhd) et qui se décomposent ensuite vers 250°C environ pour initier la réticulation. Ces températures plus élevées posent parfois des problèmes de maintien des installations à ces températures, de consommation d'énergie et de dégradation éventuelle des objets lorsque les épaisseurs sont importantes et nécessitent des températures élevées en paroi pour accroître la diffusion de la chaleur nécessaire à la décomposition du peroxyde dans l'épaisseur.

On connait enfin le procédé de réticulation dit "au silane" qui consiste, dans une première étape, à greffer du vinyltriéthoxysilane sur du polyéthylène en présence de peroxyde, par exemple lors d'une opération de granulation, puis à mettre en forme le polyéthylène silane mélangé à un catalyseur d'hydrolyse (par exemple le dibutyl-dilaurate d'étain) des groupements silanol, par exemple lors d'une extrusion ou d'une injection. Enfin, la mise en contact du produit transformé avec de l'eau liquide ou de la vapeur d'eau vers 90°C, conduit à une hydrolyse des groupements $Si\text{-}O\text{-}CH_3$ et à une condensation selon les réactions suivantes :

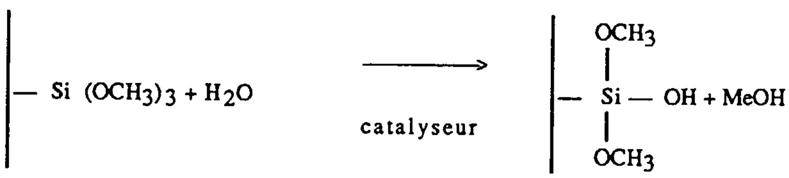


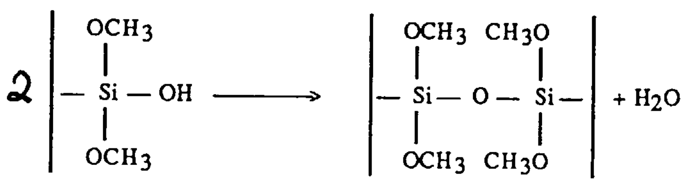

Ce procédé s'applique aussi bien au polyéthylènes basse densité qu'aux polyéthylènes haute densité. La vitesse de réticulation dépend de la teneur en catalyseur, des conditions d'hydrolyse (teneur en eau, température) et surtout de l'épaisseur de la pièce.

La diffusion de l'eau dans la pièce en polyéthylène greffé silane est en effet lente même à 95°C et les durées de réticulation varient en première approximation avec le carré de l'épaisseur de la pièce. Des temps de l'ordre de quelques jours à 1 ou 2 semaines peuvent être nécessaires pour réticuler des pièces dont l'épaisseur est de 5 à 15 mm.

Les produits ainsi fabriqués ont une perméabilité aux hydrocarbures trop élevée : elle est du même ordre que celle des polyéthylènes non réticulés.

Pour augmenter la vitesse de réticulation des polyéthylènes greffés au silane, il est possible d'augmenter les teneurs en catalyseur mais, au delà d'un certain seuil, le catalyseur n'influe plus sur la cinétique de réaction. De même, une augmentation de la température ou du degré d'humidité accroît la vitesse de réaction. C'est pourquoi les installations industrielles de réticulation des polyéthylènes greffés au silane fonctionnent à 90 ou 95°C avec soit de l'eau liquide, soit de la vapeur d'eau saturée.

Dans ces conditions, une augmentation de l'humidité relative n'est plus possible et une augmentation de la température nécessiterait d'implanter des autoclaves sous pression pour des températures ne pouvant dépasser 110 à

130°C environ selon la température de fusion du polyéthylène. Le gain sur la vitesse de réticulation serait alors faible en regard des investissements nécessaires.

Augmenter la vitesse de réticulation peut également se faire en augmentant la vitesse de diffusion de l'eau dans l'épaisseur de la pièce. On connait par exemple le brevet DE 2444829 qui décrit l'incorporation au polyéthylène greffé au silane de composés susceptibles de générer de l'eau par réaction chimique des acides provenant de la décomposition du peroxyde sur de l'oxyde de zinc ZnO. On connait également des procédés dans lesquels on incorpore directement l'eau dans la composition sous forme d'eau liquide ou de sulfate de calcium hydraté (BE 901 442), ou de trihydroxyde d'aluminum hydraté (US 4549 041). Ces procédés sont généralement utilisés pour fabriquer des mousses de polyéthylène réticulé silane par vaporisation et expansion de l'eau présente sur les hydrates .

Ces procédés s'appliquent mal à la réalisation de pièces massives, car l'eau générée dans les outillages de transformation est susceptibles de réagir immédiatement avec le polyéthylène silane et de conduire à une réticulation prématurée dans les outillages de transformation, produisant en conséquence des objets de moindre qualité (dégradation du gel sous cisaillement), dans des conditions de transformation délicates à maîtriser. De plus, les produits sont fragilisés par la présence des hétérogènéités inorganiques et présentent par ailleurs des perméabilités aux hydrocarbures élevées, du même ordre de grandeur que celles d'un polyéthylène réticulé conventionnel.

Les références précédentes, représentatives de l'état actuel des développements industriels dans le domaine de la réticulation des polyéthylènes, montrent l'intérêt de pouvoir posséder une formulation qui permettrait :

. un contrôle de la réticulation dans les outils de transformation et donc la possibilité de réaliser des pièces de forte épaisseur ; et
. une cinétique de réticulation rapide en présence d'humidité et donc une réduction du temps et des coûts de cette opération.

L'invention propose une telle composition réticulable, à base de polyéthylène, caractérisée d'une manière générale en ce qu'elle comprend de 65 à 95 %, de préférence de 75 à 95 % en poids, d'au moins un polymère (a) choisi parmi les polyéthylènes greffés silane (qui pourront être désignés dans la suite en abrégé par PERS pour polyéthylène réticulable silane), ou d'au moins un copolymère éthylène-triéthoxyvinylsilane ; de 5 à 35, de préférence de 5 à 25 % en poids, d'au moins un polymère (b) choisi parmi les polymères hydrophiles incompatibles avec le polymère (a), ainsi que, rapportées au poids total des polymères (a) et (b) de 1 à 10 % en poids, d'au moins un polymère (c) choisi parmi les copolymères et les terpolymères à base d'éthylène susceptibles de réagir chimiquement avec ledit polymère (b) (par exemple lors de transformation par extrusion...) et formés entre (i) l'éthylène et (ii) au moins un acide monocarboxylique aliphatique à insaturation éthylénique ou un ester d'alkyle d'un tel acide, et/ou au moins un acide dicarboxylique aliphatique à insaturation éthylénique ou un ester d'alkyle ou d'anhydride d'un tel acide, et de 0.001 à 0.3 % en poids, d'au moins un catalyseur d'hydrolyse (d).

Le polymère (a) peut consister en un polyéthylène de haute, moyenne ou basse densité, par exemple de 0,92 à 0,97, ayant un indice de fusion de 0,1 à 400 (déterminé selon la norme ASTM D-1238), sur lequel est greffé au moins un monomère silané répondant à la formule générale :

$$\begin{array}{rl} & OR^1 \\ & | \\ CH_2 = CH- & Si-OR^2 \\ & | \\ & OR^3 \end{array}$$

dans laquelle $R^1$, $R^2$ et $R^3$, identiques ou différents, représentent chacun un radical alkyle renfermant de 1 à 22 atomes de carbone. Comme exemples de silanes de ce type, on peut citer le vinyltriéthoxysilane et le vinyltriméthoxysilane.

Le greffage peut être réalisé selon des procédés usuels tels que le procédé SIOPLAS développé par la Société DOW-CORNING et dans lequel un mélange de polyéthylène, peroxyde et vinyltriéthoxysilane est introduit dans la trémie de l'extrudeuse préparant des granulés de polyéthylène greffé silane; ou le procédé MONOSIL, développé par la Société MAILLEFER et dans lequel le greffage du vinyltriéthoxysilane est réalisé par injection du peroxyde et du vinyltriéthoxysilane à l'état fondu dans le fourreau de la vis d'extrusion du polyéthylène à greffer.

Le polymère hydrophile (b), incompatible avec les polymères d'éthylène peut être choisi parmi :

. les polyamides usuels tels que ceux désignés pour $PA_n$ (avec n de 4 à 12) et $PA_{pq}$ (avec p et q de 4 à 10) et les divers copolyamides associés;
. les alcools polyvinyliques dérivés de l'acétate de vinyle dont le degré d'hydrolyse des motifs esters est de 80 à 99,8 % ; et
. les copolymères éthylène-alcool vinylique, en particulier ceux dont la proportion de motifs dérivés de l'éthylène ($-CH_2-CH_2-$) est inférieure à 30 % et dont l'indice de fusion (ASTM D-1238) est de 1 à 5.

Plus particulièrement le polymère (c) des compositions de l'invention peut être choisi parmi les copolymères formés à partir (i) d'éthylène et (ii) d'un acide ou un ester monocarboxylique aliphatique à insaturation éthylénique, tel que par exemple l'acide acrylique ou l'acide méthacrylique ou leurs esters d'alkyle de 1 à 22 atomes de carbone ou d'un acide, ou ester ou anhydride d'acide dicarboxylique aliphatique à insaturation éthylénique, tel que par exemple l'acide fumarique ou l'anhydride maléïque. Le polymère (c) peut encore être choisi parmi les terpolymères (statistiques, séquencés ou "à peignes") formés à partir d'éthylène, d'un acrylate ou méthacrylate d'alkyle de 1 à 22, de préférence de 1 à 8, atomes de carbone, et d'anhydride maléïque ou d'acide acrylique ou méthacrylique.

Des polymères particulièrement avantageux, aussi bien copolymères que terpolymères, peuvent être ceux dont la formule générale est la suivante :

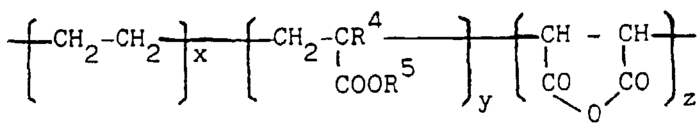

avec

$x + y + z = 1$
$x = 0{,}99$ à $0{,}50$
$y = 0$ à $0{,}40$
$z = 0{,}01$ à $0{,}1$
$R^4 = H$ ou $CH_3$
$R^5$ = alkyle de $C_1$ à $C_{22}$, de préférence de $C_1$ à $C_8$

Le catalyseur d'hydrolyse (d) introduit dans les compositions de l'invention est en général le dibutyl-dilaurate d'étain.

Un des avantages des compositions de l'invention est précisément qu'elles acceptent l'introduction en quantité importante d'un catalyseur de réticulation qui accélère l'hydrolyse de l'objet réalisé, tout en permettant un contrôle de la réticulation du PERS lors de la transformation.

Dans leur utilisation en vue de la réalisation d'objets formés tels que par exemple des profilés, des tubes, des conteneurs, des feuilles, des films ou des pièces injectées, les compositions réticulables de l'invention telles que décrites plus haut sont mises en oeuvre à des températures supérieures au point de fusion le plus élevé de leurs différents constituants, par exemple à des températures de 140 à 260°C, par des techniques conventionnelles de transformation telles que l'extrusion, l'extrusion-soufflage ou l'injection.

Après transformation, la réticulation par hydrolyse du matériau est effectuée en présence d'eau liquide ou vapeur à une température de 70 à 105°C. Le mécanisme de l'hydrolyse met vraisemblablement en jeu l'eau formée par la réaction du polymère hydrophile (b) avec le polyéthylène greffé silane.

Quoi qu'il en soit, cette réticulation présente une cinétique plus rapide que celle des polyéthylènes réticulables silanés (PERS) conventionnels. Il est alors possible de réticuler dans des temps raisonnables des objets ayant une épaisseur relativement importante (jusqu'à environ 20 mm). Les objets ainsi réalisés, à partir des compositions de l'invention, présentent un certain nombre de propriétés améliorées, plus particulièrement :

- l'aptitude à la transformation ;
- l'imperméabilité aux hydrocarbures liquides ou gazeux ;
- de bonnes propriétés mécaniques, et une bonne tenue au vieillissement en milieu hydrocarbure dans des conditions sévères.

Les exemples suivants illustrent l'invention sans la limiter.

Dans ces exemples, on a préparé plusieurs compositions que l'on a soumises à des opérations de transformation (extrusion ou mélange interne) et à des traitements (hydrolyse), comme il sera précisé ci-après. Sur les matériaux obtenus, on a effectué diverses déterminations pour en évaluer les propriétés.

Les compositions présentées sous les références 1 à 7, 10, 12 et 13 sont étudiées à titre comparatif ; les compositions 8, 9, 11, 14 et 15 illustrent l'invention.

Les compositions pondérales des formulations étudiées sont données dans les différents tableaux présentés, dans lesquels PERS, $PA_6$, $PA_{11}$, catalyseur et EAM ont les significations ci-après :

- PERS désigne un polyéthylène greffé silane commercialisé par la société ALPHACAN.
- $PA_6$ désigne un polyamide 6 commercialisé par la société RHONE-POULENC CHIMIE sous la référence $PA_6$ C216 (marque déposée).

- $PA_{11}$ désigne un polyamide 11 commercialisé par la société ATOCHEM sous la référence RILSAN BESNO (marque déposée).
- CH désigne le catalyseur d'hydrolyse qui consiste en un mélange maître contenant 90 % en poids d'éthylène et 10 % en poids de dibutyl-dilaurate d'étain ;
- EAM désigne un terpolymère éthylène (89% en poids) - acrylate d'éthyle (8 % en poids) - anhydride maléïque (3 % en poids), commercialisé par la société ATOCHEM sous la référence LOTADER 2200 (marque déposée).

EXEMPLE 1

Tableau 1

| Réf. | FORMULATION (proportion en % poids) | TGT (%) | TGH (%) ($H_2O$, 70°C) | | Temps d'immersion (heure) |
|---|---|---|---|---|---|
| 1 | PERS | 30 | 50 | après | 530 |
| 2 | PERS-CH(0,5) | 55 | 70 | après | 7 |
| 3 | PERS-CH(1) | 60 | 70 | après | 7 |
| 4 | PERS-CH(2) | 64 | 70 | après | 7 |
| 5 | PERS-$PA_6$(10) | 20 | 40 | après | 7 |
| 6 | PERS-$PA_6$(10)-CH(2) | 35 | 70 | après | 7 |
| 7 | PERS-$PA_6$(20)-CH(2) | 40 | 70 | après | 7 |
| 8 | PERS-$PA_6$(16)-CH(2)-EAM(2,5) | 35 | 70 | après | 7 |
| 9 | PERS-$PA_{11}$(16)-CH(2)-EAM(2,5) | 30 | 70 | après | 7 |

On a préparé les formulations 1 à 9 dont la composition est indiquée au tableau 1.

Chaque formulation est malaxée en mélangeur interne (Appareil "RHEOCORD HAAKE" marque déposée) à une température de 260°C sous une vitesse de rotation de 32 tours/minute.

Le taux de gel après transformation (TGT en %) déterminé après 5 minutes de malaxage et le taux de gel après hydrolyse (TGH %) déterminé après immersion dans l'eau à 70°C pendant un temps t de la formulation après transformation rendent compte de la réticulation de la composition aux stades considérés.

Les taux de gel sont déterminés par extraction dans le xylène selon une méthode dérivée de ASTM D-2765 qui prévoit :

. la pesée de 0,300 g d'échantillon dans un filtre métallique plissée ;
. l'immersion dans du xylène à l'échantillon (140°C) pendant 7 heures ;
. le séchage sous vide et la pesée du résidu ;
. et le calcul du taux de gel selon la relation :

$$TG = (\% \text{ résidu} - \% \text{ PI}) / \% \text{ PS}$$

où PI et PS représentent respectivement le poids de la phase insoluble et de la phase soluble initiales dans l'échantillon examiné.

Le PERS après transformation a une cinétique de réticulation très lente en présence d'eau (référence 1). L'incorporation de dibutyldilaurate d'étain au PERS accélère la cinétique de réticulation en présence d'eau puisque après 7 heures d'immersion à 70°C le taux de gel atteint 70 % qui est le maximum accessible à ce type de composition (références 2 à 4).

Ces formulations montrent cependant après transformation un taux de gel (TGT) élevé et fonction croissante de la teneur en catalyseur. On observe donc une réticulation importante pendant la transformation qui, non contrôlée, peut être préjudiciable pour les outils de transformation et la qualité des objets fabriqués.

Les formulations PERS-PA-Catalyseur (références 6 à 9) présentent après transformation un taux de réticulation (TGT) plus faible que les formulations conventionnelles PERS-Catalyseur (comparer notamment avec la formulation 4). On observe d'autre part que dans les mêmes conditions de réticulation en présence d'eau à 70°C, le degré de réticulation du PERS dans des mélanges PERS-PA-Catalyseur est égal à l'optimum accessible.

La présence du polyamide inhibe donc l'action du catalyseur lors de la transformation, tout en maintenant une cinétique de réticulation rapide et complète dans l'eau. Le même type d'observation peut être fait sur les essais référencés 8 et 9 réalisés en incorporant aux mélanges des terpolymères destinés à en améliorer les propriétés mécaniques.

EXEMPLE 2

On a déterminé les propriétés mécaniques en traction à 20°C d'éprouvettes prélevées sur des tubes préparés par extrusion sur une extrudeuse TROESTER équipée d'une vis de type TS 45. Les extrusions ont été réalisées à 240°C avec une vitesse de vis de 10 tours/minutes, la filière de tube utilisée a un diamètre extérieur de 42 mm et un entrefer de 3 mm. Les conditions de réticulation sont les mêmes que dans l'exemple 1 (à savoir immersion dans l'eau à 70°C pendant 7 heures).

Les éprouvettes de traction de type ASTM 4 sont découpées à l'emporte-pièce dans les tubes dans le sens longitudinal. Les essais de traction sont réalisés à 20°C selon la norme ASTM D638 (ou NF T51-034). les résultats obtenus sont donnés au tableau 2.

Tableau 2

| Réf | FORMULATION (proportions en %) | Module | Seuil | | rupture | | TGT | TGH |
|---|---|---|---|---|---|---|---|---|
| | | (MPa) | (MPa) | (%) | (MPa) | (%) | (%) | (%) |
| 4 | PERS - CH (2) | 400 | 20 | 17 | 17 | 300 | 60 | 70 |
| 12 | PERS-$PA_{11}$(30)-CH (2) | 450 | 20 | 18 | 16 | 70 | 35 | 70 |
| 11 | PERS-$PA_{11}$(30)-CH (2)-EAM (2,5) | 530 | 23 | 25 | 24 | 260 | 30 | 70 |
| 10 | PERS-$PA_{11}$(16)-CH (2) | 430 | 18 | 18 | 15 | 55 | 35 | 70 |
| 9 | PERS-$PA_{11}$(16)-CH (2)-EAM (2,5) | 450 | 20 | 20 | 20 | 300 | 30 | 70 |

Les résultats figurant au tableau 2 confirment tout d'abord les observations de l'exemple 1. Il apparaît ensuite que l'introduction de terpolymère éthylène-acrylate d'éthyle-anhydride maléïque, sans réduire le taux de gel après hydrolyse 7 heures à 70°C dans l'eau, réduit encore le taux de gel après transformation, ce qui est favorable pour extruder dans de meilleures conditions.

Il apparaît également que les propriétés mécaniques des formulations préparées avec 16 et 30 % en polyamide en présence de terpolymère sont sensiblement améliorées. Globalement ces formulations présentent le meilleur compromis entre l'aptitude à la transformation et les propriétés mécaniques en traction.

EXEMPLE 3

A partir des formulations référencées 4, 11 et 12 on a préparé des pièces extrudées dont on a soumis des éprouvettes à un vieillissement dans des conditions choisies pour représenter un milieu pétrolier assez sévère. Les éprouvettes sont placées tour à tour en milieu liquide : pétrole, sous atmosphère d'azote pendant une première période (A) d'une semaine, puis en milieu gazeux : méthane pendant une seconde période (B) d'une semaine et ainsi de suite.

Au début de chaque semaine A, le milieu est maintenu à une température de 100°C et à une pression de 100 bars (10 MPa). Au bout d'environ 50 heures, on fait subir à la pression 10 cycles de dépression/compression entre 100 bars (10 MPa) et 0, sur une période d'environ 12 heures.

Après environ 110 heures, la pression est ramenée à 0 et on abaisse la température progressivement à 20°C. A la fin de la semaine A (après 168 heures), on vidange le pétrole et on introduit le méthane. Au début de la semaine B (2ème période de 168 heures) le milieu (méthane) est à nouveau porté à 100°C et à une pression de 100 bars (10 MPa). Au bout d'environ 50 heures, on fait encore subir au milieu 10 cycles de dépression/compression entre 100 bars et 0, sur une période d'environ 12 heures. Après environ 110 heures, on ramène la surpression à 0 et on abaisse la température progressivement jusqu'à environ 20°C.

On peut alors recommencer un cycle comprenant une semaine A et une semaine B.

A la fin du dernier cycle, les éprouvettes sont prélevées. On en observe l'aspect et on détermine leur absorption de fluide par pesée (absorption relative : Δ%).

Les résultats obtenus avec des éprouvettes de matériaux réalisées à partir des formulations 4, 11, 12 sont donnés au tableau 3 ci-après, ainsi que ceux obtenu avec un polyéthylène non réticulé de densité 0,950 (réf 13)

Tableau 3

| Réf. | 200 heures | | 600 heures | |
|---|---|---|---|---|
| | Δ% | Remarques | Δ% | Remarques |
| 12 | 12.2 | cloques surface boursoufflée | 12.0 | Déterioration |

Tableau 3 (suite)

| Réf. | 200 heures | | 600 heures | |
|---|---|---|---|---|
| | Δ% | Remarques | Δ% | Remarques |
| 11 | 12.0 | RAS | 12.0 | RAS |
| 4 | 14 | RAS | 15 | RAS |
| 13 | 15 | RAS | 27 | Déterioration |

Il apparaît clairement dans cet essai très sévère que le terpolymère introduit dans la formulation 11 améliore la cohérence du matériau qui n'est alors plus sensible, dans ces conditions d'essais, au phénomène de décompression explosive.

EXEMPLE 4

Sur des échantillons prélevés dans des tubes extrudés et réticulés dans les conditions décrites à l'exemple 2 à partir des formulations décrites au tableau 4, on a effectué des mesures de perméabilité au n-heptane à 50°C.

Tableau 4

| Réf | FORMULATION (proportions en % poids) | Perméabilité (g/cm.sec) | TGT (%) | TGH (%) |
|---|---|---|---|---|
| 4 | PERS - CH (2) | $7\ 10^{-9}$ | 60 | 70 |
| 9 | PERS-$PA_{11}$(16)-CH (2) EAM (2,5) | $1{,}1\ 10^{-9}$ | 30 | 70 |
| 15 | PERS-$PA_{11}$(20)-CH (2)-EAM (2,5) | $8\ 10^{-10}$ | 30 | 70 |
| 14 | PERS-$PA_{11}$(25)-CH (2) EAM (2,5) | $2\ 10^{-10}$ | 30 | 70 |
| 11 | PERS-$PA_{11}$(30)-CH (2) EAM (2,5) | $5\ 10^{-11}$ | 30 | 70 |

On voit d'après ces résultats que la perméabilité est d'autant plus réduite que la teneur en polyamide ($PA_{11}$) est plus élevée. Les formulations 9, 11, 14 et 15 selon l'invention présentent donc des caractéristiques sensiblement améliorées par rapport à celles de la formulation 4 de référence. Ces améliorations concernent d'une part les propriétés physico-chimiques telles que perméabilité ou les propriétés mécaniques , d'autre part l'aptitude à la transformation par extrusion caractérisée par TGH-TGT. L'introduction de polyamide et de co ou terpolymère selon l'invention semble réduire l'activité du catalyseur aux températures de transformation (réduction de TGT) sans affecter la vitesse et le taux de réticulation par hydrolyse après transformation (maintien de TGH).

**Revendications**

**1.** Composition réticulable à base de polyéthylène caractérisée en ce qu'elle comprend :

- de 65 à 95 % en poids d'au moins un polymère (a) choisi parmi les polyéthylènes greffés au silane et des copolymères éthylène-triéthoxyvinylsilane ; et
- de 5 à 35 % en poids d'au moins un polymère (b) choisi parmi les polymères hydrophiles incompatibles avec les polymères d'éthylène ; ainsi que
  rapportées au poids total des polymères (a) et (b),
- de 1 à 10 % en poids d'au moins un polymère (c) choisi parmi les copolymères et les terpolymères formés entre

  (i) l'éthylène et
  (ii) au moins un acide monocarboxylique aliphatique à insaturation éthylénique ou un ester d'alkyle d'un tel acide, et/ou au moins un acide dicarboxylique aliphatique à insaturation éthylénique ou un ester d'alkyle ou d'anhydride d'un tel acide.

- de 0,001 à 0,3 % en poids d'au moins un catalyseur d'hydrolyse (d).

**2.** Composition selon la revendication 1 caractérisée en ce que la proportion de (a) est de 75 à 95 % en poids et la proportion de (b) est de 5 à 25 % en poids.

**3.** Composition selon l'une des revendications 1 et 2, caractérisée en ce que ledit polymère (a) est un polyéthylène de haute, moyenne ou basse densité (densité comprise entre 0,92 et 0,97) ayant un indice de fusion, déterminé par la norme ASTM D-1238, de 0,1 à 400, sur lequel est greffé au moins un monomère silané de formule générale :

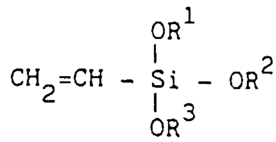

dans laquelle $R^1$, $R^2$ et $R^3$, identiques ou différents, représentent chacun un radical alkyle de 1 à 22 atomes de carbone.

**4.** Composition selon la revendication 3, caractérisée en ce que ledit monomère silané est le triéthoxyvinylsilane ou le triméthoxyvinylsilane.

**5.** Composition selon l'une des revendications 1 à 4, caractérisée en ce que ledit polymère hydrophile (b) incompatible avec les polymères d'éthylène est choisi parmi :

- les polyamides usuels notés PAn, avec n de 4 à 12, et PApq avec p et q de 4 à 10, et les copolyamides associés ;
- les alcools polyvinyliques dérivés de l'acétate de vinyle dont le degré d'hydrolyse des motifs est de 80 à 99,8 % ; et
- les copolymères éthylène-alcool vinylique.

**6.** Composition selon l'une des revendications 1 à 5, caractérisée en ce que ledit copolymère ou terpolymère répond à la formule :

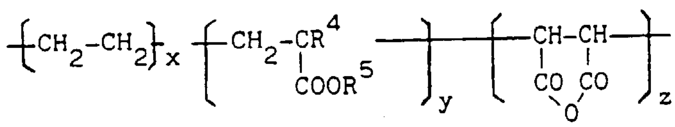

dans laquelle $x + y + z = 1$, $x = 0{,}99$ à $0{,}50$, $y = 0$ à $0{,}40$,
$z = 0{,}01$ à $0{,}1$, $R^4 = H$ ou $CH_3$ et $R^5$ = alkyle de $C_1$ à $C_{22}$.

**7.** Composition selon l'une des revendications 1 à 6, caractérisée en ce que ledit catalyseur d'hydrolyse (d) est le dibutyle-dilaurate d'étain.

**8.** Méthode de réalisation d'objet formés caractérisée en ce que l'on soumet une composition selon l'une des revendications 1 à 7 à une transformation par extrusion, extrusion-soufflage ou injection à une température comprise entre 140 et 260° C, la composition mise en forme étant ensuite réticulée en présence d'eau en phase liquide ou vapeur à une température comprise entre 70 et 105°C.

**9.** Objets formés réalisés par une méthode selon la revendication 8.

**Patentansprüche**

**1.** Vernetzbare Zusammensetzung auf Basis von Polyethylen, dadurch gekennzeichnet, daß sie:

- 65 bis 95 Gew.% wenigstens eines Polymeres (a), das aus den mit Silan gepfropften Polyethylenen und Ethylentriethoxyvinylsilan-Copolymeren ausgewählt ist, und
- 5 bis 35 Gew.% wenigstens eines Polymeres (b), das aus den mit den Ethylenpolymeren inkompatiblen hydrophilen Polymeren ausgewählt ist, sowie bezogen auf das Gesamtgewicht der Polymere (a) und (b),
- 1 bis 10 Gew.% wenigstens eines Polymeres (c), das aus den Copolymeren und den Terpolymeren, welche zwischen

(i) Ethylen und

(ii) wenigstens einer ethylenisch ungesättigten aliphatischen Monocarbonsäure oder einem Alkylester einer solchen Säure und/oder wenigstens einer ethylenisch ungesättigten aliphatischen Dicarbonsäure oder einem Alkylester oder Anhydrid einer solchen Säure, gebildet sind,

- 0,001 bis 0,3 Gew.% wenigstens eines Hydrolysekatalysators (d)

umfaßt.

**2.** Zusammensetzung nach Anspruch 1, dadurch gekennzeichnet, daß der Anteil von (a) 75 bis 95 Gew.% und der Anteil von (b) 5 bis 25 Gew.% beträgt.

**3.** Zusammensetzung nach einem der Ansprüche 1 und 2, dadurch gekennzeichnet, daß das Polymer (a) ein Polyethylen hoher, mitt lerer oder niederiger Dichte (Dichte zwischen 0,92 und 0,97 enthalten) mit einem durch die Norm ASTM D-1238, bestimmten Schmelzindex von 0,1 bis 400 ist worauf wenigstens ein Silanmonomer der allgemeinen Formel aufgepfropft ist:

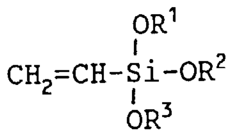

in welcher $R^1$, $R^2$ und $R^3$, die gleich oder verschieden voneinander sind, jedes einen Alkylrest mit 1 bis 22 Kohlenstoffatomen darstellt.

**4.** Zusammensetzung nach Anspruch 3, dadurch gekennzeichnet, daß das Silanmonomer das Triethoxyvinylsilan oder das Trimethoxyvinylsilan ist.

**5.** Zusammensetzung nach einem der Ansprüche 1 bis 4, dadurch gekennzeichnet, daß das mit den Ethylenpolymeren inkompatible hydrophile Polymer (b) ausgewählt ist aus:

- den gewöhnlich PAn, mit n gleich 4 bis 12, und PApq, mit p und q gleich 4 bis 12, bezeichneten Polyamiden und den verbundenen Copolyamiden,
- den von Vinylacetat abgeleiteten Polyvinylalkoholen, deren Hydrolysegrad von Einheiten 80 bis 99,8 % beträgt und
- den Ethylen-Vinylalkohol-Copolymeren.

**6.** Zusammensetzung nach einem der Ansprüche 1 bis 5, dadurch gekennzeichnet, daß das Copolymer oder Terpolymer der Formel entspricht:

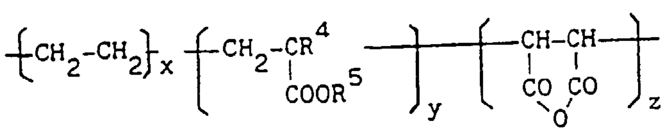

in welcher $x + y + z = 1$, $x = 0{,}99$ bis $0{,}50$, $y = 0$ bis $0{,}40$,
$z = 0{,}01$ bis $0{,}1$, $R^4 = H$ oder $CH_3$ und $R^5 = C_1$- bis $C_{22}$-Alkyl.

**7.** Zusammensetzung nach einem der Ansprüche 1 bis 6, dadurch gekennzeichnet, daß der Hydrolysekatalysator (d) Zinndibutyldilaurat ist.

**8.** Verfahren zur Herstellung von Formteilen, dadurch gekennzeichnet, daß man eine Zusammensetzung nach den Ansprüchen 1 bis 7 einer Umwandlung durch Extrusion, Extrusionsblasen oder Injektion bei einer zwischen einschließlich 140 und 260°C enthaltenen Temperatur unterwirft, wobei die in Form gebrachte Zusammensetzung dann in Gegenwart von Wasser in flüssiger oder dampfförmiger Phase bei einer zwischen einschließlich 70 und 105°C enthaltenen Temperatur vernetzt wird.

**9.** Formgegenstände, die durch ein Verfahren gemäß Anspruch 8 hergestellt sind.

## Claims

**1.** A polyethylene-based cross-linkable composition characterised in that it comprises:

- from 65 to 95% by weight of at least one polymer (a) chosen from among the silane-grafted polyethylenes and ethylene-triethoxyvinylsilane copolymers; and
- from 5 to 35% by weight of at least one polymer (b) chosen from among the hydrophilic polymers which are incompatible with the ethylene polymers;

as well as, counted with respect to the total weight of polymers (a) and (b),

- from 1 to 10% by weight of at least one polymer (c) chosen from among the copolymers and terpolymers formed between

  (i) ethylene and
  (ii) at least one aliphatic monocarboxylic acid with ethylenic unsaturation or an alkyl ester of such an acid, and/or at least one aliphatic dicarboxylic acid with ethylenic unsaturation or an alkyl ester or anhydride such an acid, and

- from 0,001 to 0.3% by weight of at least a hydrolysis catalyst (d).

**2.** A composition according to claim 1, characterised in that the proportion of (a) is 75 to 95% by weight and the proportion of (b) is 5 to 25% by weight.

**3.** A composition according to one of claims 1 and 2, characterised in that the said polymer (a) is a high, medium or low-density polyethylene (density comprised between 0.92 and 0.97) having a melt index determined by the Standard ASTM D-1238, of 0.1 to 400, on which is grafted at least one silanated monomer of the general formula :

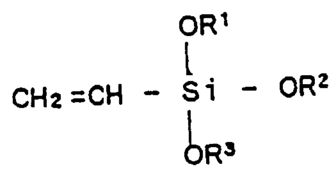

in which $R_1$, $R_2$ and $R_3$, identical or different, each represent an alkyl radical having 1 to 22 carbon atoms.

**4.** A composition according to claim 3, characterised in that the said silanated monomer is triethoxyvinylsilane or trimethoxyvinylsilane.

**5.** A composition according to one of claims 1 to 4, characterised in that said hydrophilic polymer (b) which is incompatible with the ethylene polymers is chosen among

- the conventional polyamides designated PAn, in which n is from 4 to 12, and PApq, in which p and q are from 4 to 10, and the associated copolyamides;
- the polyvinyl alcohols derived from vinyl acetate, in which the degree of hydrolysis of units is 80 to 99.8% and
- vinyl alcohol-ethylene copolymers.

**6.** A composition according to one of claims 1 to 5 characterised in that the said copolymer or polymer satisfies the formula :

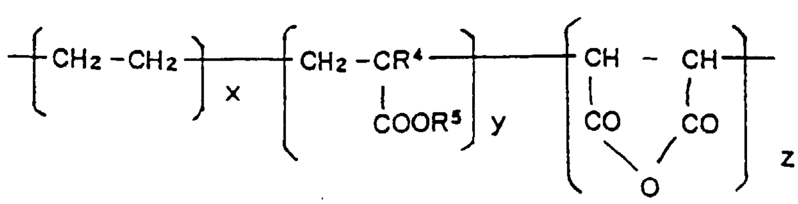

in which x + y + z = 1, x = 0.99 to 0.50, y = 0 to 0.40, z=0.01 to 0.1, $R_4$ = H or $CH_3$ and $R_5$ = alkyl with $C_1$ to $C_{22}$.

**7.** A composition according to one of claims 1 to 6, characterised in that the said hydrolysis catalyst (d) is tin dibutyl-dilaurate.

**8.** A method of producing moulded objects characterised in that a composition according to one of claims 1 to 7 is subjected to conversion by extrusion, extrusion-blow molding or injection at a temperature comprised between 140 and 260°C, the composition shaped then being cross-linked in the presence of water in the liquid or vapor phase at a temperature comprised between 70 and 105°C.

**9.** Moulded objects produced by a method according to claim 8.